# EUROPEAN PATENT SPECIFICATION

(11) **EP 4 320 366 B1**
(45) Date of publication and mention of the grant of the patent: **02.12.2026**
(21) Application number: 22721848.4
(22) Date of filing: 07.04.2022
(51) Int. Cl.: F16F 9/02, F16F 9/43

(54) **GAS SPRING**
GASFEDER
RESSORT À GAZ

(30) Priority: 07.04.2021 IT 202100008618
(43) Date of publication of application: 14.02.2024
(73) Proprietor: Special Springs S.r.l., 36060 Romano d'Ezzelino (VI) (IT)
(72) Inventor: BORDIN, Francesco, 36060 ROMANO D'EZZELINO (VI) (IT); FIORESE, Massimo, 36060 ROMANO D'EZZELINO (VI) (IT); TODESCO, Mattia, 36060 ROMANO D'EZZELINO (VI) (IT)
(74) Representative: Studio Torta S.p.A.
(86) International application number: PCT/IB2022/053265
(87) International publication number: WO 2022/215027

(56) References cited:
- EP-A1- 0 427 468
- EP-A1- 1 241 373
- EP-A1- 3 236 102
- WO-A1-2009/063003
- US-A1- 2018 087 596
- US-A1- 2020 300 329

## Description

### Cross-Reference to related Patent Applications

This Patent Application claims priority from Italian Patent Application No. 102021000008618 filed on April 7, 2021.

### Technical Field of the Invention

The present invention relates to a gas spring.

More in detail, this invention relates to a gas spring adapted to be used in the sheet-metal moulding field. Use to which the following disclosure will make explicit reference without however loosing in generality.

### State of the art

As is known, gas springs that are used in moulds for sheet-metal moulding generally comprise: a cup-shaped body that is substantially cylindrical in shape; a guide bushing inserted in a fluid-tight manner within the cup-shaped body, at the mouth of the cup-shaped body; and a piston substantially cylindrical in shape, which is inserted in pass-through and axially slidable manner into in the hole at centre of the guide bushing, so as to be able to move with reference to the cup-shaped body parallel to the longitudinal axis of the same cup-shaped body.

The piston is moreover inserted in the guide bushing in a fluid-tight manner so as to form/delimit, together with the cup-shaped body and guide bushing, a variable-volume closed chamber, which is filled with a high-pressure gas that tends to maximise the volume of the closed chamber and, therefore, continuously pushes the piston outside of the cup-shaped body.

The piston therefore remains abutted against the guide bushing, in a completely extracted configuration, until it is subject to an axial force able to overcome the thrust of the high-pressure gas.

In the gas springs installed in cold sheet-metal moulding presses, the gas contained in the variable-volume chamber has a nominal pressure usually ranging between 50 and 250 bar, which significantly increases when the piston is pushed inside the cup-shaped body.

Unfortunately, during the cold moulding cycles, it may happen that the piston of the gas spring remains blocked in the retracted position, or is forced to complete an axial stroke that is longer than the planned one, with all the safety problems that this entails.

In order to minimise the risks related to gas spring malfunctioning, in recent years, the larger manufacturers of gas springs have inserted, in their devices, safety systems that, when certain critical conditions occur, are able to release the gas from the cup-shaped body quickly, though in a controlled manner, so as to minimise the risks of the gas spring's explosion and/or of the piston's explosive ejection.

More in detail, in recent years, the major manufacturers of gas springs have inserted, in their devices, safety systems that are able to automatically discharge the pressurised gas present into the gas spring when the piston "overtravels", i.e. when the piston enters into the cup-shaped body beyond the maximum stroke allowed by the dimensions of the gas spring.

The gas springs described in European patents EP0959263 B1 and EP1241373 B1, for example, are provided with a mushroom-shaped safety plug, which is screwed into a through hole made in the bottom wall of the cup-shaped body. EP1241373B1 discloses a gas spring according to the preamble of claim 1. US2020300329A1 discloses another known gas spring.

The threaded shank of the safety plug is dimensioned so as to protrude cantilevered inside the cup-shaped body, and has a blind discharge duct that extends coaxial to the longitudinal axis of the plug and is hermetically closed at the distal end of the threaded shank. The distal end of the shank, in addition, is structured so as to break in case of a collision. When the piston re-enters into the cup-shaped body beyond the permitted maximum stroke, the lower end of the piston hits/impacts against the safety plug, causing the tip of the threaded shank to break and, consequently, the opening of the discharge duct of the plug.

Unfortunately, the safety plug described above is not very reliable, because it may accidentally discharge the gas outside of the gas spring even when the gas spring is not in a critical condition.

During normal use, in fact, it often happens that the pressure of the gas inside the gas spring is lowered and temporarily brought almost to ambient pressure. In this case, the weight resting on the piston of the gas spring may be such as to push the piston against the distal end of the shank of the safety plug with sufficient energy to cause the deformation thereof. This deformation may, successively, lead to the accidental breakage of the tip of the shank and the ill-timed release of the gas through the central discharge duct, thus making the gas spring useless.

The same problems can occur during transport and/or assembly of the safety plug. In fact, a small impact at the distal end of the shank of the safety plug is sufficient to compromise the correct operation of the plug.

In order to overcome these drawbacks, the gas spring described in European patent EP3314144 B1 is provided with a mushroom-shaped safety plug, which is inserted in the bottom wall of the cup-shaped body before the piston, so as to bring the head of the safety plug in abutment against the inner surface of the bottom wall of the cup-shaped body. In this case, the annular sealing gasket is located on the distal end of the shank, a short distance from the mouth of the through hole.

When the piston enters into the cup-shaped body beyond the permitted maximum stroke, the lower end of the piston hits/impacts against the head of the safety plug, deforming it up to cause an axial displacement of the plug sufficient to bring the distal end of the shank and the sealing gasket outside of the through hole.

The structure of the head of the safety plug is more solid than the distal end of the shank of the safety plug described in European patents EP0959263 B1 and EP1241373 B1, and has a shape such as to support the weight of the piston in case of normal depressurization of the variable-volume chamber.

Unfortunately, this second safety plug greatly complicates the assembly and repair operations of the gas spring, because the part cannot be replaced from the outside. In addition, the head of the safety plug described in European Patent EP3314144 B1 has a very rigid and resilient structure, which requires considerable kinetic energy to be deformed, thus the discharge of the pressurised gas can only take place when the piston hits the plug head with a very high force. Consequently, the safety plug described in patent EP3314144 B1 is not very timely in discharging the pressurised gas in case of overtravel of the piston.

In addition to releasing the gas spring in the event of overtravel of the piston, the safety plug described in patent EP3314144 B1 is moreover able to discharge the pressurised gas to the outside when the gas pressure exceeds a given maximum threshold.

Also in this case, however, the particular structure of the safety plug does not make this operation quick and timely.

### Object and Summary of the Invention

Aim of the present invention is to provide a safety plug for gas springs which may quickly discharge the pressurised gas, both in the event of overtravel and in the event of excess pressure, and which has production and assembly costs lower than those of currently known safety systems.

In accordance with this aims, according to the present invention there is provided a gas spring as defined in Claim 1 and preferably, though not necessarily, in any of the claims depending thereon.

### Brief Description of the Drawings

The present invention will now be described with reference to the accompanying drawings, which illustrate a non-limiting embodiment thereof, wherein:
- Figure 1 is a perspective view of a gas spring realized according to the teachings of this invention, with parts in cross-section and parts removed for clarity's sake;
- Figure 2 is a front section of the lower part of the gas spring illustrated in Figure 1, in overtravel condition and with parts in cross-section and parts removed for clarity's sake;
- Figure 3 is a perspective view of the safety plug of the gas spring illustrated in Figures 1 and 2, with parts removed for clarity's sake; whereas
- Figure 4 is a section view of the safety plug shown in Figure 3, with parts removed for clarity's sake.

### Detailed Description of Preferred Embodiments of the Invention

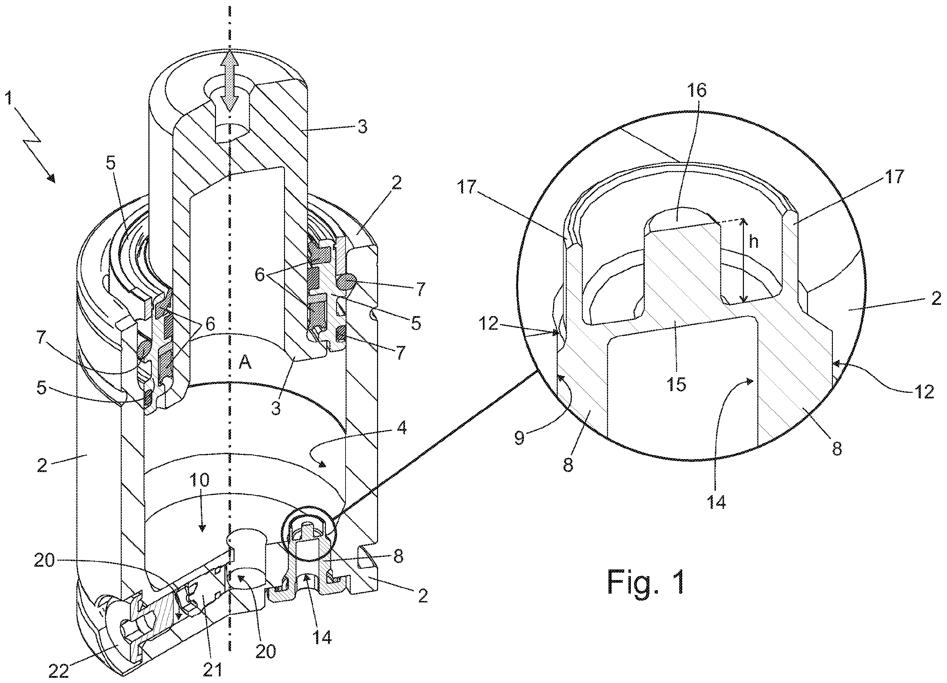

With reference to Figure 1, reference number 1 denotes, as a whole, a gas spring that may advantageously be used in presses or moulds for cold sheet-metal moulding and the like.

The gas spring 1 firstly comprises: a cup-shaped body 2 preferably substantially cylindrical in shape, which is preferably made of metal and preferably has a monolithic structure; and a movable piston 3 preferably substantially cylindrical in shape, which is preferably made of metal and is inserted axially slidable manner into the cup-shaped body 2, so as to be able to freely move forwards and backwards with respect to the cup-shaped body 2, parallel to the longitudinal axis A of the cup-shaped body 2. The movable piston 3, in addition, is coupled to the cup-shaped body 2 in a fluid-tight manner, so as to form/delimit, inside of the cup-shaped body 2, a variable-volume closed chamber 4 adapted to contain nitrogen or another pressurised gas.

More in detail, the movable piston 3 preferably has a cup-shaped structure, and is preferably fitted in axially slidable and pass-through manner into a guide bushing 5, which is preferably made of metal and , in turn, is firmly fixed into the cup-shaped body 2, preferably substantially at the mouth of the same cup-shaped body 2.

In addition, the movable piston 3 is coupled in a fluid-tight manner to the guide bushing 5 preferably via the interposition of at least one and more advantageously a number of annular sealing gaskets 6 preferably made of polymeric material.

The guide bushing 5, in turn, is coupled in fluid-tight manner to the cup-shaped body 2, or rather to the mouth of cup-shaped body 2, preferably via the interposition of at least one and more advantageously a number of annular sealing gaskets 7 preferably made of polymeric material.

Preferably the nitrogen or other gas contained in the closed chamber 4, on the other hand, has a nominal pressure ranging between 50 and 250 bar.

With reference to Figures 1, 2, 3, and 4, in addition, the gas spring 1 also comprises a substantially mushroom-shaped safety plug 8, separate and distinct from the cup-shaped body 2, which is preferably made of metal, and is inserted into a through hole 9 that is made in the bottom wall 10 of cup-shaped body 2, beneath the movable piston 3, so as to seal the through hole 9 substantially in fluid-tight manner. Preferably the through hole 9 is moreover substantially parallel to the axis A of cup-shaped body 2.

More in detail, the safety plug 8 is provided with a head 11 preferably substantially discoidal in shape, and with a shank 12 substantially cylindrical in shape and at least partially threaded, which is screwed into the through hole 9 preferably so as to bring the head 11 in abutment against the bottom wall 10 of cup-shaped body 2, outside of the latter. Preferably the shank 12 of safety plug 8 is, therefore, substantially parallel to the longitudinal axis A of cup-shaped body 2.

Preferably at least one annular sealing gasket 13, preferably made of polymeric material, is furthermore interposed between the head 11 of safety plug 8 and the bottom wall 10 of cup-shaped body 2.

More in detail, the annular sealing gasket 13 is at least partially accommodated within an annular groove specifically made in the head 11 of safety plug 8.

With reference to Figures 1, 2, 3, and 4, the shank 12 of safety plug 8 is moreover dimensioned so as to protrude cantilevered inside the cavity of cup-shaped body 2, towards the piston 3, so that its distal end may be reached/struck by the piston 3 in the event of overtravel, i.e. when the piston 3 enters into the cup-shaped body 2 beyond the permitted maximum stroke.

In addition, the shank 12 of safety plug 8 is provided, inside itself, with a longitudinal gas discharge duct 14, blind and preferably substantially straight, which extends roughly for the whole length of shank 12, preferably while remaining substantially coaxial or, in any case, parallel to the longitudinal axis B of shank 12, and is hermetically closed, at the distal end of shank 12, by a preferably substantially plate-like, transversal breakable septum 15. Moreover the breakable septum 15 is substantially discoidal, and is preferably substantially coaxial and/or perpendicular to the longitudinal axis B of shank 12.

In other words, the discharge duct 14 is a blind duct and is fluid-tight insulated from the cavity of cup-shaped body 2, and therefore from the closed chamber 4, by the breakable septum 15.

The breakable septum 15, in addition, is made in one piece with the rest of shank 12, and is suitably dimensioned to automatically break/fracture/detach from the rest of shank 12 when the pressure difference between the two faces of the breakable septum 15 exceeds a pre-set limit value.

With reference to Figures 1, 2, 3 and 4, in addition to the breakable septum 15, the distal end of the shank 12 of safety plug 8 also includes: a central protuberance/ projection 16, preferably substantially cylindrical or truncated-cone in shape, which extends cantilevered from the breakable septum 15 on the side opposite the discharge duct 14, preferably while remaining locally coaxial or, in any case, parallel to the longitudinal axis B of shank 12; and a protruding annular collar 17, preferably substantially tubular-cylindrical in shape, which surrounds the breakable septum 15, preferably substantially seamlessly, and extends cantilevered from the main segment or stem of shank 12, beyond the breakable septum 15, so as to encircle the central protuberance/projection 16 while remaining spaced from the latter.

More in detail, the central protuberance/projection 16 is preferably arranged substantially at centre of the breakable septum 15, on the side opposite the discharge duct 14. In addition, the central protuberance/projection 16 is preferably also aligned to the discharge duct 14 immediately beneath, and has a cross-section smaller than that of the same discharge duct 14.

The protruding collar 17, on the other hand, preferably has a height less than or equal to the nominal height h of the central protuberance/projection 16, and is preferably moreover substantially coaxial with the central protuberance /projection 16.

In other words, the central protuberance/projection 16 is located at centre of protruding collar 17.

More in detail, similarly to the breakable septum 15, also the central protuberance/projection 16 and the protruding collar 17 are preferably substantially coaxial with the longitudinal axis B of shank 12.

Similarly to the breakable septum 15, the small central protuberance/projection 16 and the protruding collar 17 are moreover made in one piece with the rest of the shank 12 of safety plug 8.

In other words, the central protuberance/projection 16 is made in one piece with the breakable septum 15. The protruding collar 17, on the other hand, is made in one piece with the main segment or stem of shank 12.

More in detail, the breakable septum 15, the central protuberance/projection 16 and the protruding collar 17 are preferably realized by making, preferably by milling or other mechanical material-removing machining, an annular groove directly on the tip of shank 12.

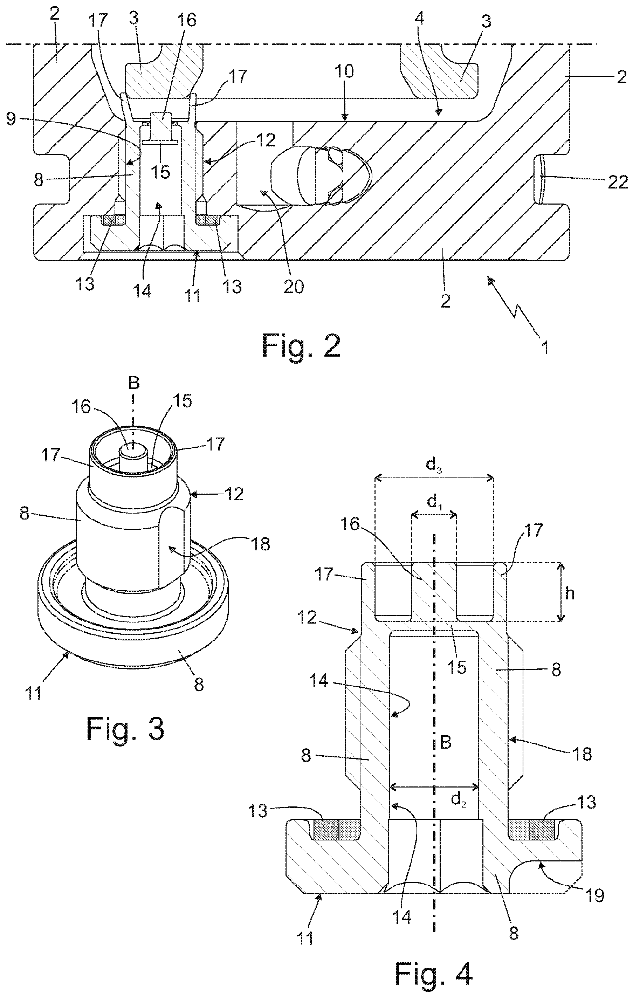

With reference to Figure 3, in the example shown, in particular, the discharge duct 14 is preferably a rectilinear duct with a substantially circular cross-section.

Preferably, the discharge duct 14 moreover starts at a hexagonal seat for hex keys or the like located at centre of head 11.

The breakable septum 15, on the other hand, is preferably dimensioned so as to automatically break/fracture /detach when the pressure difference between the two faces of the partition is equal to or greater than 700 bar.

In the example shown, moreover, the central protuberance/projection 16 has a height h preferably ranging between 1 and 15 mm (millimetres).

Furthermore, the outer diameter d₁ of the central protuberance/projection 16 is preferably smaller than the nominal diameter d₂ of discharge duct 14.

More in detail, the outer diameter d₁ of the central protuberance/projection 16 is preferably at least 10% smaller than the nominal diameter d₂ of the longitudinal discharge duct 14 of safety plug 8.

In the example shown, in particular, the outer diameter d₁ of the central protuberance/projection 16 is preferably at least 30% smaller than the nominal diameter d₂ of the discharge duct 14.

With reference to Figure 3, in the example shown, moreover, the height of protruding collar 17 is preferably substantially equal to the height h of the central protuberance/projection 16.

In addition, the protruding collar 17 preferably has an inner diameter d₃ greater than the nominal diameter d₂ of the discharge duct 14.

More specifically, the inner diameter of protruding collar 17 is preferably at least 10% greater than the nominal diameter d₂ of the discharge duct 14.

Preferably the outer diameter of the protruding collar 17 finally under-approximates the outer diameter of the main segment or stem of shank 12.

With particular reference to Figure 3, preferably the shank 12 of safety plug 8 finally has, on the outside, a preferably substantially straight, longitudinal groove 18 that crosses roughly the whole threaded portion of shank 12, preferably while remaining locally substantially parallel to the longitudinal axis B of shank 12.

In addition, a portion of the head 11 of safety plug 8 preferably has a controlled-deformation structure, which allows the discoid head 11 to locally deform/fold towards the outside when the pressure of the gas exceeds a second, pre-set limit value, so as to enable the release of the pressurised gas from the cup-shaped body 2. Preferably this second limit value is moreover greater than the first limit value associated with the breakable septum 15.

Clearly, the second limit value could also be less than or equal to the first limit value.

In the example shown, in particular, the second limit value is preferably, though not necessarily, equal to or greater than 750 bar.

More in detail, in the example shown, the safety plug 8 has, on the discoid head 11, a transversal weakening bevel or groove 19.

With reference to Figures 1 and 2, preferably the cup-shaped body 2 is finally provided with a gas supply duct 20 that extends in pass-through manner across the bottom wall 10 and/or the side wall of cup-shaped body 2, so as to put the inner cavity of the cup-shaped body, and thus the closed chamber 4, in direct communication with the outside.

Preferably, the gas spring 1 finally also comprises: a check valve 21, which is located along the supply duct 20 and is oriented so as to only allow the gas to flow in the direction of the inner cavity of the cup-shaped body; and/or a preferably removable, closing plug 22 which is located at the mouth of supply duct 20 and is preferably adapted to close/seal in substantially fluid-tight manner the supply duct 20.

General operation of gas spring 1 is easily inferable from the above and therefore does not require further explanations.

As regards the safety plug 8, during transport and/or assembly of safety plug 8 on the bottom of cup-shaped body 2, the protruding collar 17 on the distal end of the shank 12 protects the central protuberance/projection 16 from knocks and collisions that could compromise the structural integrity of the breakable septum 15 beneath.

With reference to Figure 2, in the event of overtravel, on the other hand, the lower edge of the piston 3 strikes/ impacts the distal end of shank 12, simultaneously deforming the protruding collar 17 and the central protuberance/ projection 16. The mechanical stresses discharged onto the central protuberance/projection 16 are transmitted directly to the breakable septum 15 which, in turn, partially fractures or completely detaches from the rest of shank 12, thereby opening the discharge duct 14 in order to allow the pressurised gas to escape from the closed chamber 4 through the discharge duct 14.

In conditions of excessive pressure, in turn, the difference in pressure between the two faces of the breakable septum 15 causes the cracking or entire breakage of the breakable septum 15, with the consequent opening of the discharge duct 14 and release of the pressurised gas from the closed chamber 4.

In addition, experimental tests have shown that, if the variable-volume chamber 4 of gas spring 1 is temporarily depressurised for use and/or maintenance, the lower edge of the piston 3 rests simultaneously on the central protuberance /projection 16 and on the protruding collar 17. The protruding collar 17 helps the central protuberance/ projection 16 to support the weight of the piston 3, drastically reducing the mechanical stresses transmitted to the breakable septum 15 below. In this way, the structural integrity of the breakable septum 15 is preserved.

The advantages connected to the particular structure of the distal end of shank 12 of safety plug 8 are remarkable.

Firstly, the safety plug 8 is made in one piece and can be inserted and removed from the bottom wall 10 of cup-shaped body 2 without removing the piston 3, thereby simplifying the maintenance of gas spring 1.

In addition, in the event of overtravel, the presence of the breakable septum 15 makes the safety plug 8 much more reactive than the safety plug described in European patent EP3314144 B1, with the greater intrinsic safety that this entails.

In addition, in the event of excess pressure, the safety plug 8 offers two possible, alternative escape passageways for the discharge of the pressurised gas, with the greater intrinsic safety that this entails.

It is finally clear that modifications and variations may be made to the above-described gas spring 1, without however departing from the scope of the present invention as defined in the appended claims.

For example, the protruding collar 17 may be a tubular sleeve separate and distinct from the shank 12, which is adapted to be screwed or otherwise rigidly fixed to the top of the main segment or stem of shank 12.

## Claims

1. A gas spring (1) comprising: a cup-shaped body (2); a movable piston (3) which is inserted in axially slidable manner in the cup-shaped body (2) and is coupled to the cup-shaped body (2) in fluid-tight manner, so as to delimit a variable-volume closed chamber (4) adapted to contain a pressurised gas; and a safety plug (8) provided with a shank (12) which extends in pass-through manner in the bottom wall (10) of the cup-shaped body (2), and protrudes cantilevered within the cup-shaped body (2) so that its distal end can be reached/struck by the movable piston (3) in the case of an overtravel;
the gas spring (1) being **characterised in that** the shank (12) of the safety plug (8) has, inside itself, a gas discharge duct (14) which, at the distal end of the shank (12), is hermetically closed by a breakable septum (15) that is substantially discoidal in shape and is made in one piece with the rest of the shank (12), wherein the breakable septum (15) is adapted to automatically break/fracture/ detach when the pressure difference between the two faces of the septum exceeds a predetermined limit value;
and **in that** the distal end of the shank (12) additionally comprises: a central protuberance/projection (16) that extends cantilevered from the breakable septum (15) on the side opposite the gas discharge duct (14), is located substantially at the centre of the breakable septum (15), is made in one piece with the breakable septum (15) and has a cross-section smaller than that of the gas discharge duct (14);
and a protruding annular collar (17) that surrounds and extends cantilevered beyond the breakable septum (15) so as to encircle the central protuberance/projection (16) while remaining spaced from the same central protuberance/projection (16), and is made in one piece with the rest of the shank (12).

2. The gas spring according to Claim 1, wherein the central protuberance/projection (16) is substantially cylindrical or truncated-cone in shape.

3. The gas spring according to Claim 1, wherein the central protuberance/projection (16) is located substantially at the centre of the gas discharge duct (14) immediately underneath.

4. The gas spring according to Claim 1 or 2, wherein the protruding annular collar (17) is substantially tubular-cylindrical in shape.

5. The gas spring according to any one of the preceding claims, wherein the central protuberance/projection (16) is located at the centre of the protruding annular collar (17).

6. The gas spring according to any one of the preceding claims, wherein the protruding annular collar (17) has a height less than or equal to the height (h) of the central protuberance/projection (16).

7. The gas spring according to any one of the preceding claims, wherein the gas discharge duct (14) is a rectilinear duct with a substantially circular cross-section.

8. The gas spring according to Claim 7, wherein the diameter (d₁) of the central protuberance/projection (16) is at least 10% smaller than the nominal diameter (d₂) of the gas discharge duct (14).

9. The gas spring according to Claim 7 or 8, wherein the protruding annular collar (17) has an inner diameter (d₃) greater than the nominal diameter (d₂) of the gas discharge duct (14).

10. The gas spring according to any one of the preceding claims, wherein the central protuberance/projection (16) has a height (h) ranging between 1 and 15 mm.

## Patentansprüche

1. Gasfeder (1), umfassend: einen becherförmigen Körper (2); einen beweglichen Kolben (3), der axial verschiebbar in den becherförmigen Körper (2) eingesetzt ist und fluiddicht mit dem becherförmigen Körper (2) gekoppelt ist, um eine geschlossene Kammer (4) mit variablem Volumen zu begrenzen, die ausgelegt ist, um ein Druckgas zu enthalten, und einen Sicherheitsstopfen (8), der mit einem Schaft (12) versehen ist, der sich durchgehend in der Bodenwand (10) des becherförmigen Körpers (2) erstreckt und freitragend in den becherförmigen Körper (2) hineinragt, sodass sein distales Ende von dem beweglichen Kolben (3) im Falle eines Überhubs erreicht/getroffen werden kann,
wobei die Gasfeder (1) **dadurch gekennzeichnet ist, dass** der Schaft (12) des Sicherheitsstopfens (8) in seinem Inneren einen Gasabführungskanal (14) aufweist, der an dem distalen Ende des Schafts (12) hermetisch durch eine zerbrechbare Trennwand (15) verschlossen ist, die im Wesentlichen scheibenförmig ist und in einem Stück mit dem übrigen Schaft (12) ausgebildet ist, wobei die zerbrechbare Trennwand (15) ausgelegt ist, um selbsttätig zu brechen/einen Bruch zu erleiden/sich abzulösen, wenn die Druckdifferenz zwischen den beiden Seitenflächen der Trennwand einen vorbestimmten Wert überschreitet, und **dadurch, dass** das distale Ende des Schafts (12) zusätzlich Folgendes umfasst: einen zentralen Fortsatz/Vorsprung (16), der freitragend aus der zerbrechbaren Trennwand (15) auf der dem Gasabführungskanal (14) gegenüberliegenden Seite herausragt, sich im Wesentlichen im Zentrum der zerbrechbaren Trennwand (15) befindet, in einem Stück mit der zerbrechbaren Trennwand (15) ausgebildet ist und einen Querschnitt aufweist, der kleiner als derjenige des Gasabführungskanals (14) ist, und einen herausragenden Ringkragen (17), der die zerbrechbare Trennwand (15) umgibt und sich freitragend jenseits dieser erstreckt, sodass er den zentralen Fortsatz/Vorsprung (16) umschließt, während er von dem zentralen Fortsatz/Vorsprung (16) beabstandet bleibt, und in einem Stück mit dem übrigen Schaft (12) ausgebildet ist.

2. Gasfeder nach Anspruch 1, wobei der zentrale Fortsatz/Vorsprung (16) im Wesentlichen zylindrisch oder kegelstumpfförmig ist.

3. Gasfeder nach Anspruch 1, wobei sich der zentrale Fortsatz/Vorsprung (16) im Wesentlichen im Zentrum des unmittelbar darunter liegenden Gasabführungskanals (14) befindet.

4. Gasfeder nach Anspruch 1 oder 2, wobei der herausragende Ringkragen (17) im Wesentlichen rohrzylindrisch geformt ist.

5. Gasfeder nach einem der vorhergehenden Ansprüche, wobei sich der zentrale Fortsatz/Vorsprung (16) im Zentrum des herausragenden Ringkragens (17) befindet.

6. Gasfeder nach einem der vorhergehenden Ansprüche, wobei der herausragende Ringkragen (17) eine Höhe aufweist, die kleiner oder gleich der Höhe (h) des zentralen Fortsatzes/Vorsprungs (16) ist.

7. Gasfeder nach einem der vorhergehenden Ansprüche, wobei der Gasabführungskanal (14) ein geradliniger Kanal mit einem im Wesentlichen kreisförmigen Querschnitt ist.

8. Gasfeder nach Anspruch 7,
wobei der Durchmesser (d₁) des zentralen Fortsatzes/Vorsprungs (16) mindestens 10 % kleiner als der Nenndurchmesser (d₂) des Gasabführungskanals (14) ist.

9. Gasfeder nach Anspruch 7 oder 8,
wobei der herausragende Ringkanal (17) einen Innendurchmesser (d₃) aufweist, der größer als der Nenndurchmesser (d₂) des Gasabführungskanals (14) ist.

10. Gasfeder nach einem der vorhergehenden Ansprüche, wobei der zentrale Fortsatz/Vorsprung (16) eine Höhe (h) im Bereich zwischen 1 und 15 mm aufweist.

## Revendications

1. Ressort à gaz (1) comprenant : un corps en forme de coupelle (2) ; un piston mobile (3) qui est inséré de manière à pouvoir coulisser axialement dans le corps en forme de coupelle (2) et qui est couplé au corps en forme de coupelle (2) de manière étanche aux fluides, de sorte à délimiter une chambre fermée à volume variable (4) adaptée pour contenir un gaz sous pression ; et un bouchon de sécurité (8) muni d'une tige (12) qui s'étend de manière traversante dans la paroi de fond (10) du corps en forme de coupelle (2) et fait saillie en porte-à-faux à l'intérieur du corps en forme de coupelle (2), de sorte que son extrémité distale puisse être atteinte/heurtée par le piston mobile (3) en cas de dépassement de course ;
le ressort à gaz (1) étant **caractérisé en ce que** la tige (12) du bouchon de sécurité (8) comporte, en son sein, un conduit d'évacuation de gaz (14) qui, à l'extrémité distale de la tige (12), est fermé hermétiquement par une cloison cassable (15) qui est de forme sensiblement discoïdale et réalisé d'un seul tenant avec le reste de la tige (12), dans lequel la cloison cassable (15) est conçue pour se rompre/se fracturer/se détacher automatiquement lorsque la différence de pression entre les deux faces de la cloison dépasse une valeur limite prédéterminée ; et **en ce que** l'extrémité distale de la tige (12) comprend en outre : une protubérance/saillie centrale (16) qui s'étend en porte-à-faux à partir de la cloison cassable (15) du côté opposé au conduit d'évacuation de gaz (14), est située sensiblement au centre de la cloison cassable (15), est formée d'un seul tenant avec la cloison cassable (15) et présente une section transversale inférieure à celle du conduit d'évacuation de gaz (14) ; et un collier annulaire en saillie (17) qui entoure la cloison cassable (15) et s'étend en porte-à-faux au-delà de celle-ci de manière à encercler la protubérance/saillie centrale (16) tout en restant espacé de cette même protubérance/saillie centrale (16), et qui est réalisé d'un seul tenant avec le reste de la tige (12).

2. Ressort à gaz selon la revendication 1, dans lequel la protubérance/saillie centrale (16) a une forme sensiblement cylindrique ou tronconique.

3. Ressort à gaz selon la revendication 1, dans lequel la protubérance/saillie centrale (16) est située sensiblement au centre du conduit d'évacuation de gaz (14) situé immédiatement en dessous.

4. Ressort à gaz selon la revendication 1 ou 2, dans lequel le collier annulaire en saillie (17) a une forme sensiblement tubulaire-cylindrique.

5. Ressort à gaz selon l'une quelconque des revendications précédentes, dans lequel la protubérance/saillie centrale (16) est située au centre du collier annulaire en saillie (17).

6. Ressort à gaz selon l'une quelconque des revendications précédentes, dans lequel le collier annulaire en saillie (17) présente une hauteur inférieure ou égale à la hauteur (h) de la protubérance/saillie centrale (16).

7. Ressort à gaz selon l'une quelconque des revendications précédentes, dans lequel le conduit d'évacuation de gaz (14) est un conduit rectiligne de section transversale sensiblement circulaire.

8. Ressort à gaz selon la revendication 7, dans lequel le diamètre (d₁) de la protubérance/saillie centrale (16) est inférieur d'au moins 10 % au diamètre nominal (d₂) du conduit d'évacuation de gaz (14).

9. Ressort à gaz selon la revendication 7 ou 8,
dans lequel le collier annulaire en saillie (17) présente un diamètre intérieur (d₃) supérieur au diamètre nominal (d₂) du conduit d'évacuation de gaz (14) .

10. Ressort à gaz selon l'une quelconque des revendications précédentes, dans lequel la protubérance/saillie centrale (16) présente une hauteur (h) comprise entre 1 et 15 mm.
